Europäisches Patentamt

**European Patent Office**

**Office européen des brevets**

(19)

(11) Veröffentlichungsnummer: **0 018 355**
**B1**

(12) **EUROPÄISCHE PATENTSCHRIFT**

(45) Veröffentlichungstag der Patentschrift:
**18.05.83**

(51) Int. Cl.³: **B 29 J 5/00, C 08 L 97/02**

(21) Anmeldenummer: **80890047.6**

(22) Anmeldetag: **17.04.80**

(54) **Holzspanplatte und Verfahren zu deren Herstellung.**

(30) Priorität: **23.04.79 AT 3040/79**

(43) Veröffentlichungstag der Anmeldung:
**29.10.80 Patentblatt 80/22**

(45) Bekanntmachung des Hinweises auf die Patenterteilung:
**18.05.83 Patentblatt 83/20**

(84) Benannte Vertragsstaaten:
**CH DE FR GB IT LI NL SE**

(56) Entgegenhaltungen:
**EP-A-0 010 537**
**BE-A-664 765**
**DE-B-2 052 313**

(73) Patentinhaber: **Österreichische Hiag-Werke Aktiengesellschaft, Seybelgasse 20, A-1235 Wien (AT)**

(72) Erfinder: **Mayerhoffer, Herbert, Gluckgasse 2, A-1010 Wien (AT)**

(74) Vertreter: **Pawloy, Heinrich, Dr. et al, Patentanwälte Dr. Heinrich Pawloy Dipl.-Ing. Helmut Sonn Dipl.-Ing. Arnulf Weinzinger Riemergasse 14, A-1010 Wien (AT)**

## Holzspanplatte und Verfahren zu deren Herstellung

Die Erfindung bezieht sich auf eine Holzspanplatte, welche als Bindemittel ein Aminoplast enthält, und auf ein Verfahren zu deren Herstellung.

Bei solchen Holzspanplatten werden die Eigenschaften zu einem ganz wesentlichen Teil durch das Bindemittel, welches die Holzspäne miteinander verbindet, bestimmt. Zu diesen Eigenschaften zählen dabei z.B. die Festigkeitswerte, die Beständigkeit der Platten gegen Feuchtigkeit und auch die Menge an chemisch ungebunden gebliebenem Formaldehyd, welcher nach Beendigung des Pressprozesses der Platten im Bindemittel noch vorliegt, da diese Formaldehydmenge beim Entweichen aus der Platte eine höchst unerwünschte Umweltbelastung verursachen kann. Die Eigenschaften der Platten werden dabei vor allem von der Menge des jeweils eingesetzten Bindemittels, von dessen Verteilung auf das Spanmaterial und von dessen Aushärtungsgrad, der sich beim Verpressen des Spanmaterials einstellt, beeinflusst, und es ist weiter auch die Zusammensetzung des Bindemittels ein merklicher Faktor für die Platteneigenschaften. Eine Erhöhung des Bindemittelgehaltes erhöht in der Regel die Festigkeitswerte und auch die Feuchtigkeitsbeständigkeit einer Platte, verursacht aber durch den im Vergleich zu den Kosten des Spanmaterials hohen Preis des Bindemittels einen erhöhten Kostenaufwand und bringt, auf die Plattenmenge bezogen, auch eine grössere Menge an nicht zur Reaktion gekommenen Formaldehyd, welcher im Bindemittel vorliegt, mit sich. Um nun den nachteiligen Auswirkungen von freiem Formaldehyd im Bindemittel entgegenzuwirken, hat man bisher die Menge des im Bindemittel vorliegenden Reaktionspartners des Formaldehyds auf Kosten des Formaldehyds erhöht, um auf diese Weise eine möglichst vollständige Bindung des Formaldehyds im Zuge des Heisspressvorganges, bei dem die Platten geformt und gehärtet werden, zu erzielen. Hierdurch entsteht aber ein erhöhter Aufwand für das einzusetzende Mehr des Reaktionspartners des Formaldehyds im Bindemittel, ohne dass sich dadurch eine bessere Festigkeit oder eine bessere Beständigkeit der Platte ergibt. Aber auch das Herbeiführen einer Verbesserung der Platteneigenschaften, nämlich einer Erhöhung der Festigkeitswerte bei gleichzeitigem Absenken der Menge an ungebunden vorliegendem Formaldehyd im Bindemittel durch Vorsehen einer längeren Presszeit bei der Plattenherstellung führt zu einer empfindlichen Erhöhung des Aufwandes für die Fertigung, da ja die Pressen ausserordentlich hohe Investitionskosten erfordern und man demgemäss bestrebt sein muss, mit einer möglichst kurzen Presszeit das Auslangen zu finden.

Es ist nun ein Ziel der vorliegenden Erfindung, eine Holzspanplatte eingangs erwähnter Art zu schaffen, welche, bezogen auf die Menge des eingesetzten Bindemittels, gute Festigkeits- und Beständigkeitseigenschaften aufweist und bei der weiter auch die Menge des im Bindemittel frei vorliegenden Formaldehyds gegenüber bisherigen Holzspanplatten deutlich herabgesetzt ist; es soll dabei weiter die zu schaffende Platte mit einem sehr geringen Herstellungsaufwand produzierbar sein.

Die erfindungsgemässe Holzspanplatte eingangs erwähnter Art ist dadurch gekennzeichnet, dass die Festharzmenge des Bindemittels im Bereich der Plattenoberflächen weniger als 8%-Masse der als absolut trocken (atro) gerechneten Spanmaterials dieses Plattenbereiches beträgt, und dass die Festharzmenge des Bindemittels im Bereich der Plattenmitte prozentuell auf das dort vorliegende atro Spanmaterial bezogen, gleich gross oder grösser als im Bereich der Plattenoberflächen ist.

Durch den bei der erfindungsgemässen Holzspanplatte im Vergleich zu bisher üblichen deutlich verminderten Festharzgehalt im Bereich der Plattenoberfläche kann eine leichtere und gleichmässigere Härtung des Bindemittels über die ganze Plattendicke erzielt werden, so dass sich bei einer bestimmten Gesamtbindemittelmenge gleichzeitig eine verbesserte Festigkeit und durch die bessere Härtung auch ein verminderter Gehalt an Restformaldehyd ergibt. Dabei kann festgestellt werden, dass die solcherart erzielte Verbesserung der Eigenschaften nicht durch eine längere Pressdauer erkauft werden muss, sondern sich aus einem besseren Ablauf des im Zuge des Pressens der Platten stattfindenden Härteprozesses des Bindemittels ergibt. Durch die vorzugsweise vorgesehene höhere Beleimung des in der Plattenmitte vorliegenden Spanmaterials wird von der Bindemittelmenge her die Festigkeit der Platte erhöht. Es stellt dies eine Abkehr von der bisher üblichen Technik dar, da bei dieser die Plattenmitte deutlich weniger beleimt wurde als die Oberflächenschichten und für die Oberflächenschichten nicht selten eine über 10%-Masse Festharz, bezogen auf atro Spanmaterial, liegende Beleimung zum Einsatz gebracht worden ist.

Eine vorteilhafte Ausführungsform der erfindungsgemässen Holzspanplatte ist dadurch gekennzeichnet, dass in an sich bekannter Weise der Feinanteil des Spanmaterials im Bereich der Plattenoberflächen angereichert ist, dass dieser Feinanteil eine Festharzmenge von weniger als 7%-Masse seines atro gerechneten Spanmaterials als Bindemittel enthält, dass in an sich bekannter Weise der Grobanteil des Spanmaterials im Bereich der Plattenmitte angereichert ist, und dass dieser Grobanteil eine Festharzmenge von mindestens 6%-Masse, vorzugsweise mehr als 7%-Masse, seines atro gerechneten Spanmaterials als Bindemittel enthält. Man erhält so auf Basis einer üblichen Plattenstruktur, die für viele Verarbeitungsfälle vorteilhaft ist, bei geringem Herstellungsaufwand sehr gute Eigenschaften.

Die Erfindung bezieht sich weiter auf ein Verfahren zur Herstellung einer erfindungsgemässen Holzspanplatte, wobei das zerspante Rohmaterial einer Trocknung auf eine unter 4%, vorzugsweise unter 2%, liegende Feuchte und einer Grössenklassierung in einen Feinanteil und in einen Grobanteil unterworfen wird, und hierauf der Feinanteil und der Grobanteil unabhängig voneinander mit wässrigen Aminoplastflotten beleimt werden und danach das so erhaltene beleimte Spanmaterial gestreut wird und dann das gestreute Spanmaterial unter Druck und Hitze zu Platten verpresst wird, wobei insbesondere das beleimte Spanmaterial beim Streuen dahingehend verteilt wird, dass im oberflächennahen Bereich der Feinanteil und im Mittenbereich der Grobanteil überwiegt. Hierbei ist erfindungsgemäss vorgesehen, dass der Feinanteil des Spanmaterials mit einer Aminoplastflotte beleimt wird, deren Festharzkonzentration zwischen 10- und 35%-Masse liegt und hierbei eine Leimmenge eingesetzt wird, die weniger als 8%-Masse des atro gerechneten Feinanteils des Spanmaterials an Festharz enthält, und dass vorzugsweise der Grobanteil des Spanmaterials mit einer Beleimung versehen wird, die, bezogen auf den atro gerechneten Grobanteil des Spanmaterials, prozentuell mindestens gleich viel Festharz enthält, wie die Beleimung des Feinanteils des Spanmaterials. Durch das Beleimen des Feinanteils des Spanmaterials mit einer Aminoplastflotte, deren Festharzkonzentration zwischen 10- und 35%-Masse liegt, ergibt sich eine sehr gute Verteilung des Bindemittels auf diesen Anteil des Spanmaterials, und es wird weiter eine für das Verpressen günstige Feuchte im Feinanteil des Spanmaterials erzielt, welche den Wärmetransport zum Grobanteil des Spanmaterials wirksam unterstützt, wobei gleichzeitig durch die sich aus der vorgesehenen Flottenkonzentration ergebenden Verhältnisse eine langsame Aushärtung der Feinspanbeleimung erfolgt, was insbesondere dann von Bedeutung ist, wenn das Feinspanmaterial im oberflächennahen Bereich und die Grobspäne im Mittenbereich der Platte überwiegen; in diesem Fall wird ein besonders günstiger Verlauf der Härtung des Bindemittels über die ganze Plattenstärke in verhältnismässig kurzer Zeit erzielt.

Bevorzugt ist beim erfindungsgemässen Verfahren vorgesehen, dass zum Beleimen des Feinanteils des Spanmaterials eine Aminoplastflotte, deren Festharzkonzentration zwischen 20- und 30%-Masse liegt, eingesetzt wird.

Weiter wird bevorzugt, dass zum Beleimen des Feinanteils des Spanmaterials eine Leimmenge eingesetzt wird, die 5- bis 6,5%-Masse des atro gerechneten Feinanteils des Spanmaterials an Festharz enthält.

Im Interesse einer verhältnismässig hohen Festigkeit der Platten ist es günstig, wenn man vorsieht, dass der Grobanteil des Spanmaterials mit einer Beleimung versehen wird, die, bezogen auf den atro gerechneten Grobanteil des Spanmaterials, prozentuell um mindestens 1%-Masse Festharz mehr enthält wie der Feinanteil des Spanmaterials.

Sowohl für den Ablauf der Bindemittelhärtung im Zuge des Heisspressvorganges als auch für das Erzielen verhältnismässig hoher Festigkeitswerte der herzustellenden Platten ist es günstig, wenn zum Beleimen des Grobanteils des Spanmaterials eine Aminoplastflotte, deren Festharzkonzentration zwischen 30- und 55%-Masse liegt, eingesetzt wird. Hierbei wird vorzugsweise eine Aminoplastflotte, deren Festharzkonzentration zwischen 35- und 45%-Masse liegt, eingesetzt.

Für den Ablauf des Härtungsprozesses ist es weiter günstig, wenn beim Beleimen die Feuchte des Grobanteils des Spanmaterials auf einen unter 8% liegenden Wert eingestellt wird.

Die beim erfindungsgemässen Verfahren erzielbare gute und gleichmässige Verteilung des Bindemittels auf den Feinanteil des Spanmaterials lässt bei verhältnismässig geringem Einsatz an Festharz eine feste Oberfläche der Platten erzielen. Dies kann auch dahingehend ausgenützt werden, dass man für den Bereich der Plattenmitte als Bindemittel ein zu verhältnismässig günstigem Preis erhältliches Harnstoffharz einsetzt, und die Beleimung des Deckschichtspanmaterials mit einem hochwertigen Aminoplast, wie z.B. einem Melaminharz, vornimmt. Hierzu kann noch erwähnt werden, dass für die erfindungsgemässe Technik eine Reihe verschiedener Aminoplaste geeignet sind, wobei neben dem schon erwähnten Harnstoffharz und dem schon erwähnten Melaminharz z.B. auch Thioharnstoffharze, Dicyandiamidharze usw. in Frage kommen.

Durch die im Rahmen der erfindungsgemässen Technik vorgesehene Anwendung einer verhältnismässig niedrigen Flottenkonzentration des Bindemittels für die Beleimung jenes Anteils des Spanmaterials, der vorwiegend im Bereich der Plattenoberflächen zu liegen kommt, wird, wie bereits erwähnt, die Härtungsgeschwindigkeit im Oberflächenbereich verlangsamt, hingegen im Mittenbereich der Platten durch eine zur Beleimung des dort befindlichen Spanmaterials angewendete höhere Konzentration der Bindemittelflotte und durch intensiven Wärmetransport von den Plattenoberflächen her beschleunigt, so dass eine maximale Aushärtung des Bindemittels in verhältnismässig kurzer Zeit erzielt wird und das Bindemittel seine maximale Bindekraft entwickelt. Hierbei bildet sich erst gegen Ende des Heisspressvorganges eine ausgehärtete Deckschicht aus.

Das Streuen des zur Platte zu verpressenden Spankuchens aus den beim erfindungsgemässen Verfahren getrennt voneinander beleimten Spanfraktionen kann auf verschiedene Weise erfolgen. So kann man z.B. aus den Fraktionen eine Mehrschichtschüttung, die dann zu einer Mehrschichtplatte verpresst wird, bilden. Man kann aber auch die Fraktionen nach dem Beleimen miteinander vermischen und mit einer Vorrichtung, welche eine teilweise Aufteilung des ihr zugeführten Spanmaterials herbeiführt, ein Span-Vlies herstellen, bei dem der Feinanteil im Bereich der Deckschichten angereichert ist und korrespondierend dazu der Grobanteil des Spanmaterials in der Plattenmitte, was eine bessere Bindung der Schichten miteinander ergibt als das getrennte Schütten.

Die als Bindemittel für den Oberflächenbereich bzw. die in der Deckschicht der Platte vorliegenden Späne vorgesehene Aminoplastflotte kann vorteilhaft härterfrei sein, da die Oberflächenschichten nur langsam härten sollen, und es ergibt sich aus dem Fehlen von Härtern auch der Vorteil, dass keine unreagierten säureabspaltenden Substanzen an der Plattenoberfläche zurückbleiben können, welche später Anlass zu Korrosionserscheinungen an Werkstücken, die mit solchen Platten in Verbindung gebracht werden, geben könnten. Man kann aber vorteilhaft der zur Bildung des Bindemittels der Mittelschicht der Platte vorgesehenen Aminoplastflotte Härter zusetzen.

Analog wie bei anderen Techniken kann auch bei der erfindungsgemässen Technik das Spanmaterial mit verschiedenen Zusätzen, wie z.B. Paraffinemulsion, Pilzschutzmittel und dergleichen versetzt werden, wobei solche Zusätze getrennt von der Bindemittelflotte oder vermischt mit dieser angewendet werden können.

Es wird darauf hingewiesen, dass die unter den Artikel 54(3)EPÜ fallende EP-A-10 537 ein Verfahren zur Herstellung von Holzspanplatten behandelt, bei dem das Spanmaterial mit einer wässrigen Flotte eines Aminoplasts beleimt wird. Es wird dabei eine Flotte eingesetzt, welche Festharz in einem Anteil zwischen 20- und 35%-Masse enthält, wobei die Menge der Leimflotte so gewählt wird, dass sich eine Beleimung von weniger als 6%-Masse des gesamten, als absolut trocken gerechneten Spanmaterials an Festharz ergibt. Der genannten europäischen Patentanmeldung ist dabei entnehmbar, dass mit dieser Technik eine Verbesserung der Beleimung erzielt werden kann. Es findet sich dabei aber kein Hinweis darauf, dass die Beleimung dahingehend ausgeführt werden soll, dass die Festharzmenge des Bindemittels im Mittenbereich der herzustellenden Spanplatten, prozentuell auf das dort vorliegende Spanmaterial bezogen, gleich gross oder grösser als im Bereich der Plattenoberflächen sein soll.

Die Erfindung wird nun an Hand von Beispielen weiter erläutert:

Beispiel 1

Ein Gemisch aus 25% Stammholz, 40% Sägewerksabfällen und 35% Hackschnitzel, also ein überwiegend aus Abfallholz bestehendes Rohmaterial, wurde nach der in der Spanplattenindustrie üblichen Technik zu Spänen zerkleinert. Dieses Spanmaterial wurde auf eine Restfeuchte von 1% getrocknet und in einer Sichtungseinrichtung einer Grössenklassierung in einen Feinanteil und einen Grobanteil unterworfen. Der Feinanteil, dessen Menge ca. 35%-Masse des gesamten Spanmaterials war, wurde darauf mit einer wässrigen Flotte eines Harnstoff-Formaldehyd-Leimes, die eine Konzentration von 23%-Masse an Festharz aufwies und daneben noch eine Paraffinemulsion enthielt, beleimt. Dabei wurde die Leimmenge so gewählt, dass der beleimte Feinanteil des Spanmaterials einen Beleimungsgrad von 5,2%-Masse Festharz, berechnet auf atro Spanmaterial, aufwies. Es stellte sich dabei eine Feuchte des beleimten Spanmaterials von 16% ein. Der Grobanteil des Spangutes wurde in einem eigenen Beleimungsvorgang in einem Mischer mit einer wässrigen Flotte eines Harnstoff-Formaldehyd-Leimes, welche eine Konzentration von 42,5%-Masse Festharz hatte und welche als Härter Ammonchlorid in einer Menge von 1,8%-Masse, berechnet auf Festharz, und daneben eine Paraffinemulsion als Hydrophobierungsmittel enthielt, beleimt. Die Menge der hierfür eingesetzten Flotte wurde so gewählt, dass der Beleimungsgrad des beleimten Spanmaterials 5,8%-Masse Festharz, berechnet auf atro Spanmaterial, betrug. Es ergab sich eine Feuchte des so beleimten Spanmaterials von 7%. Das so vorbereitete Spanmaterial wurde zu einem dreischichtigen Spänevlies gestreut, wobei der Feinanteil des Spanmaterials überwiegend in den beiden Deckschichten und der Grobanteil nahezu ausschliesslich in der Mittelschicht zu liegen kam, und es wurde dieses Spänevlies in einer Heisspresse unter Einwirkung von Hitze und Druck mit einer Presszeit von 15 s/mm Rohdicke zu einer Spanplatte von 19 mm Dicke und einer Wichte von 690 kg/m³ gepresst. Die so hergestellte Spanplatte wurde hinsichtlich der Anforderungen der DIN 68763 geprüft, wobei die Platte diesen Anforderungen ausgezeichnet entsprechen konnte.

Beispiel 2

Ein im wesentlichen aus Stammholz (80% Nadelholz und 20% leichtes Laubholz) bestehendes Rohmaterial wurde zerspant und das Spanmaterial analog Beispiel 1 getrocknet und in einen Feinanteil und einen Grobanteil aufgeteilt. Der Feinanteil und der Grobanteil des Spanmaterials wurden getrennt voneinander mit wässrigen Flotten eines Harnstoff-Formaldehyd-Leimes mit einem Molverhältnis von 1:1,4 beleimt und durch Aufsprühen von Heissparaffin auf die Späne (Feinanteil 1%-Masse/atro Späne, Grobanteil 0,7%-Masse/atro Späne) hydrophobiert. Hierbei wurde zur Beleimung des Feinanteils eine Flotte mit einem Gehalt von 26,6%-Masse an Festharz eingesetzt, die mit 0,2%-Masse Ammonchlorid (berechnet auf Festharz) als Härter versehen war. Die Menge dieser Flotte wurde so gewählt, dass sich eine Beleimung von 4,5%-Masse Festharz, berechnet auf atro Feinanteil des Spanmaterials ergab. Es ergab sich hierbei eine Feuchte der beleimten Späne von 12,5%. Zur Beleimung des Grobanteils des Spanmaterials wurde eine 48,2%-Masse Festharz enthaltende Leimflotte mit 2,0%-Masse Ammonchlorid (berechnet auf Festharz) eingesetzt. Die Menge dieser Flotte wurde so gewählt, dass sich eine Beleimung von 6,5%-Masse Festharz, berechnet auf atro Grobanteil des Spanmaterials ergab. Es ergab sich dabei eine Feuchte der beleimten Späne von 7%. Danach wurden die beiden beleimten Anteile des Spanmaterials miteinander vermischt und zu einem Spänevlies gestreut. Es wurde dabei eine Streueinrichtung mit einem Separierungseffekt verwendet, und hierdurch kam das Feinspanmaterial im wesentlichen in den Deckschichten und das Grobspanmaterial im wesentlichen in der Mittelschicht zu liegen. Dieses Spänevlies wurde in einer Einetagenpresse unter Druck und Hitze mit 8 s/mm Rohdicke zu einer 22 mm dicken Platte mit 680 kg/m³ Wichte gepresst. Nach einer Klimatisierung wurde die Platte geprüft. Es ergab sich eine Biegefestigkeit von 16,7 N/mm² und eine Querzugfestigkeit von 0,37 N/mm². Weiter wurde die Formaldehydabspaltung aus der fertigen Spanplatte nach der FESYP-Methode geprüft, wobei sich ein Wert von 16 mg/100 g Spanplatte ergab.

Beispiel 3

Ein Spanmaterial, welches aus einem Rohmaterial ähnlich Beispiel 1 hergestellt und in einen Feinanteil und einen Grobanteil klassiert worden war, wurde getrocknet, wobei nach der Trocknung der Feinanteil eine Feuchte von 2,5% und der Grobanteil eine Feuchte von 1% hatte. Der Feinanteil wurde mit einer Flotte eines Melaminharzes mit 32%-Masse Festharz, die mit einer Paraffinemulsion versetzt war, beleimt. Hierbei wurde eine Beleimung von 5,0%-Masse Festharz, gerechnet auf atro Spanmaterial-Feinanteil, gebildet. Es ergab sich eine Feuchte der beleimten Späne von 10,5%. Der Grobanteil des Spanmaterials wurde mit einer Flotte eines Harnstoff-Formaldehyd-Leimes, die 44,6%-Masse Festharz enthielt, die ebenfalls mit einer Paraffinemulsion und mit einem Härter (2%-Masse Ammonchlorid, bezogen auf Festharz) versetzt war, beleimt. Durch Wahl der Flottenmenge wurde eine Beleimung von 6,2%-Masse Festharz, gerechnet auf atro Spanmaterial, hergestellt. Es ergab sich eine Feuchte der beleimten Späne von 7,2%. Analog Beispiel 1 wurden die beiden Anteile des Spanmaterials zu einem dreischichtigen Vlies gestreut und mit einer Presszeit von 12 s/mm Rohdicke zu einer Dreischichtplatte mit 19 mm Dicke und 690 kg/m³ Wichte gepresst. Die Platte wurde danach geprüft und entsprach den Anforderungen von DIN 68763.

Beispiel 4

Ein nur aus Stammholz hergestelltes Spanmaterial mit geringem Staubanteil wurde auf eine Feuchte <1% getrocknet und in einen Feinanteil und einen Grobanteil klassiert. Danach wurde der Feinanteil des Spanmaterials mit einer 19%-Masse Festharz enthaltenden Flotte eines Harnstoff-Formaldehyd-Leimes, welche auch mit einer Paraffinemulsion versetzt war, beleimt. Die Flottenmenge wurde so gewählt, dass sich eine Beleimung des Spanmaterials von 3,8%-Masse Festharz, bezogen auf atro Spanmaterial-Feinanteil, ergab, und es stellte sich eine Feuchte des beleimten Spanmaterials von 15,5% ein. Der Grobanteil wurde mit einer wässrigen Flotte, die 35%-Masse Festharz eines Harnstoff-Formaldehyd-Leimes mit 2%-Masse Ammonchlorid (auf Festharz bezogen) und eine Paraffinemulsion enthielt, beleimt. Es wurde eine Beleimung von 4,8%-Masse Festharz, bezogen auf atro Spanmaterial-Grobanteil, aufgebracht, wobei sich eine Feuchte von 8% einstellte. Danach wurden beide Anteile des Spanmaterials miteinander gemischt und analog Beispiel 2 zu einem Spänevlies gestreut, und dieses Vlies wurde unter Druck und Hitze mit 17 s/mm Rohdicke zu einer 16 mm starken Platte mit einer Wichte von 720 kg/m³ gepresst. Bei der nachfolgenden Prüfung der Platte wurden die nach DIN 68763 vorgesehenen Werte erreicht.

**Patentansprüche**

1. Holzspanplatte, deren Bindemittel ein Aminoplast ist, dadurch gekennzeichnet, dass die Festharzmenge des Bindemittels im Bereich der Plattenoberfläche weniger als 8%-Masse des atro gerechneten Spanmaterials dieses Plattenbereiches beträgt, und dass die Festharzmenge des Bindemittels im Bereich der Plattenmitte prozentuell, auf das dort vorliegende atro Spanmaterial bezogen, gleich gross oder grösser als im Bereich der Plattenoberflächen ist.

2. Holzspanplatte nach Anspruch 1, dadurch gekennzeichnet, dass in an sich bekannter Weise der Feinanteil des Spanmaterials im Bereich der Plattenoberflächen angereichert ist, dass dieser Feinanteil eine Festharzmenge von weniger als 7%-Masse seines atro gerechneten Spanmaterials als Bindemittel enthält, dass in an sich bekannter Weise der Grobanteil des Spanmaterials im Bereich der Plattenmitte angereichert ist, und dass dieser Grobanteil eine Festharzmenge von mindestens 6%-Masse, vorzugsweise mehr als 7%-Masse, seines atro gerechneten Spanmaterials als Bindemittel enthält.

3. Verfahren zur Herstellung einer Holzspanplatte nach Anspruch 1 oder 2, wobei das zerspante Rohmaterial einer Trocknung auf eine unter 4%, vorzugsweise unter 2%, liegende Feuchte und einer Grössenklassierung in einen Feinanteil und in einen Grobanteil unterworfen wird, und hierauf der Feinanteil und der Grobanteil unabhängig voneinander mit wässerigen Aminoplastflotten beleimt werden und danach das so erhaltene beleimte Spanmaterial gestreut wird, und dann das gestreute Spanmaterial unter Druck und Hitze zu Platten verpresst wird, wobei insbesondere das beleimte Spanmaterial beim Streuen dahingehend verteilt wird, dass im oberflächennahen Bereich der Feinanteil und im Mittenbereich der Grobanteil überwiegt, dadurch gekennzeichnet, dass der Feinanteil des Spanmaterials mit einer Aminoplastflotte beleimt wird, deren Festharzkonzentration zwischen 10- und 35%-Masse liegt, und hierbei eine Leimmenge eingesetzt wird, die weniger als 8%-Masse des atro gerechneten Feinanteils des Spanmaterials an Festharz enthält, und dass vorzugsweise der Grobanteil des Spanmaterials mit einer Beleimung versehen wird, die, bezogen auf den atro gerechneten Grobanteil des Spanmaterials, prozentuell mindestens gleich viel Festharz enthält, wie die Beleimung des Feinanteils des Spanmaterials.

4. Verfahren nach Anspruch 3, dadurch gekennzeichnet, dass zum Beleimen des Feinanteils des Spanmaterials eine Aminoplastflotte, deren Festharzkonzentration zwischen 20- und 30%-Masse liegt, eingesetzt wird.

5. Verfahren nach Anspruch 3 oder 4, dadurch gekennzeichnet, dass zum Beleimen des Feinanteils des Spanmaterials eine Leimmenge eingesetzt wird, die 5- bis 6,5%-Masse des atro gerechneten Feinanteils des Spanmaterials an Festharz enthält.

6. Verfahren nach einem der Ansprüche 3 bis 5, dadurch gekennzeichnet, dass der Grobanteil des Spanmaterials mit einer Beleimung versehen wird, die, bezogen auf den atro gerechneten Grobanteil des Spanmaterials, prozentuell um mindestens 1%-Masse Festharz mehr enthält wie der Feinanteil des Spanmaterials.

7. Verfahren nach einem der Ansprüche 3 bis 6, dadurch gekennzeichnet, dass zum Beleimen des Grobanteils des Spanmaterials eine Aminoplastflotte, deren Festharzkonzentration zwischen 30- und 55%-Masse liegt, eingesetzt wird.

8. Verfahren nach Anspruch 7, dadurch gekennzeichnet, dass eine Aminoplastflotte, deren Festharzkonzentration zwischen 35- und 45%-Masse liegt, eingesetzt wird.

9. Verfahren nach einem der Ansprüche 3 bis 8, dadurch gekennzeichnet, dass beim Beleimen die Feuchte des Grobanteils des Spanmaterials auf einen unter 8% liegenden Wert eingestellt wird.

10. Verfahren nach einem der Ansprüche 3 bis 9, dadurch gekennzeichnet, dass zum Beleimen des Grobanteils des Spanmaterials eine als Harz ein Harnstoff-Formaldehyd-Kondensat oder ein harnstoffreiches Aminoplast enthaltende Flotte und zum Beleimen des Feinanteils des Spanmaterials eine als Harz mindestens überwiegend ein Melaminharz enthaltende Flotte eingesetzt wird.

## Claims

1. A wood chip board the binder of which is an aminoplast, characterized in that the amount of solid resin of the binder in the area of the board surface is less than 8% by weight of the a.d. calculated chip material of this board zone, and that the amount of solid resin of the binder in the area of the center of the board calculated as a percentage based on the a.d. chip material present there is equal to or greater than in the area of the bord surfaces.

2. The wood chip board of claim 1, characterized in that the fine portion of the chip material is concentrated in the area of the board surfaces in a manner known per se, that this fine portion contains an amount of solid resin of less than 7% by weight based on the a.d. calculated chip material as binder, that the coarse portion of the chip material is concentrated in the area of the center of the board in a manner known per se and that said coarse portion contains a amount of solid resin of at least 6% by weight, preferably more than 7% by weight, based on the a.d. calculated chip material, as binder.

3. A process for preparing a wood chip board according to claim 1 or 2, in which the cut raw material is subjected to drying to give a moisture content of less than 4%, preferably less than 2%, and to classifying into a fine portion and a coarse portion, whereafter the fine portion and the coarse portion are glued independently with aqueous aminoplast liquors, and then the glued chip material thus obtained is scattered and that then the scattered chip material is compressed under pressure and heat to form boards, the glued chip material being distributed in scattering especially such, that in the area near the surfaces the fine portion predominates and in the center area the coarse portion predominates, characterized in that the fine portion of the chip material is glued with an aminoplast liquor the concentration of solid resin of which is between 10 and 35% weight, and that an amount of glue is used containing less than 8% by weight based on the a.d. calculated fine portion of the chip material of solid resin, and that preferably the coarse portion of the chip material is provided with a glue which, based on the a.d. calculated coarse portion of the chip material, contains percentually at least the equal amount of solid resin such as the glue of the fine portion of the chip material.

4. The process of claim 3, characterized in that for gluing the fine portion of the chip material an aminoplast liquor is used, the concentration of solid resin of which is between 20 and 30% by weight.

5. The process of claim 3 or 4, characterized in that for gluing the fine portion of the chip material an amount of glue is used containing 5 to 6,5% by weight based on the a.d. calculated fine portion of the chip material of solid resin.

6. The process of one of claims 3 to 5, characterized in that the coarse portion is provided with a glue containing percentually at least 1% by weight more of solid resin, based on the a.d. calculated chip material, than the fine portion of the chip material.

7. The process of one of claims 3 to 6, characterized in that for gluing the coarse portion of the chip material an aminoplast liquor is used, the concentration of solid resin of which is between 30 and 55% by weight.

8. The process of claim 7, characterized in that an aminoplast liquor is used, the concentration of solid resin of which is between 35 and 45% by weight.

9. The process of one of claims 3 to 8, characterized in that during the gluing step the moisture content of the coarse portion of the chip material is adjusted to a value of less than 8%.

10. The process of one claims 3 to 9, characterized in that for gluing the coarse portion of the chip material a liquor is used which contains a urea-formaldehyde-condensate or a urearich aminoplast as resin, and for gluing the fine portion of the chip material a liquor is used which contains at least predominatly a melamine resin.

**Revendications**

1. Panneau de particules dont le liant est un aminoplaste, caractérisé en ce que la quantité de résine solide du liant dans la région de la surface du panneau s'élève à moins de 8% en masse de la matière particulaire, comptée à l'état absolument sec, de cette région du panneau, et en ce que la quantité de résine solide du liant dans la région du centre du panneau, en pourcentage, rapportée à la matière particulaire à l'état absolument sec présente en cet endroit, est aussi grande ou plus grande que dans la région des surfaces du panneau.

2. Panneau de particules suivant la revendication 1, caractérisé en ce que, d'une façon connue en soi, la fraction fine de la matière particulaire est enrichie dans la région des surfaces du panneau, en ce que cette fraction fine contient comme liant une quantité de résine solide de moins de 7% en masse de sa matière particulaire comptée MS, en ce que, d'une façon connue en soi, la fraction grossière de la matière particulaire est enrichie dans la région du centre du panneau et en ce que cette fraction grossière contient comme liant une quantité de résine solide d'au moins 6% en masse, de préférence de plus de 7% en masse, de sa matière particulaire comptée MS.

3. Procédé pour la fabrication d'un panneau de particules suivant la revendication 1 ou 2, dans lequel la matière première fragmentée est soumise à un séchage jusqu'à une humidité au-dessous de 4%, de préférence au-dessous de 2%, et à une séparation dimensionnelle en une fraction fine et une fraction grossière puis la fraction fine et la fraction grossière sont encollées indépendamment l'une de l'autre avec des liqueurs d'aminoplastes aqueuses et, ensuite, la matière particulaire encollée ainsi obtenue est étalée, puis la matière particulaire étalée est pressée en plaques sous pression et à chaud, cependant que, en particulier, la matière particulaire encollée est distribuée lors de l'étalement en tendant à faire en sorte que dans la région proche de la surface la fraction fine soit prédominante et que dans la région centrale la fraction grossière soit prédominante, caractérisé en ce que la fraction fine de la matière particulaire est encollée avec une liqueur d'aminoplaste dont la concentration en résine solide est comprise entre 10 et 35% en masse et pour cela est utilisée une quantité de colle qui contient en résine solide moins de 8% en masse de la fraction fine comptée MS de la matière particulaire et en ce que, de préférence, la fraction grossière de la matière particulaire est munie d'un encollage qui, rapporté à la fraction grossière comptée MS, de la matière particulaire contient en pourcentage, au moins autant de résine solide que l'encollage de la fraction fine de la matière particulaire.

4. Procédé suivant la revendication 3, caractérisé en ce que, pour l'encollage de la fraction fine de la matière particulaire, on utilise une liqueur d'aminoplaste dont la concentration en résine solide est comprise entre 20 et 30% en masse.

5. Procédé suivant la revendication 3 ou 4, caractérisé en ce que, pour l'encollage de la fraction fine de la matière particulaire, on utilise une quantité de colle qui contient, en résine solide, 5 à 6,5% en masse de la fraction fine, comptée MS de la matière particulaire.

6. Procédé suivant l'une des revendications 3 à 5, caractérisé en ce que la fraction grossière de la matière particulaire est munie d'un encollage qui par rapport à la fraction grossière comptée MS, de la matière particulaire, contient en pourcentage au moins 1% en masse de résine solide de plus que la fraction fine de la matière particulaire.

7. Procédé suivant l'une des revendications 3 à 6, caractérisé en ce que, pour l'encollage de la fraction grossière de la matière particulaire, on utilise une liqueur d'aminoplaste dont la concentration en la résine solide est comprise entre 30 et 55% en masse.

8. Procédé suivant la revendication 7, caractérisé en ce que l'on utilise une liqueur d'aminoplaste dont la concentration en résine solide est comprise entre 35 et 45% en masse.

9. Procédé suivant l'une des revendications 3 à 8, caractérisé en ce que, lors de l'encollage, l'humidité de la fraction grossière de la matière particulaire est réglée sur une valeur située au-dessous de 8%.

10. Procédé suivant l'une des revendications 3 à 9, caractérisé en ce que, pour l'encollage de la fraction grossière de la matière particulaire, on utilise une liqueur contenant, comme résine, un condensat d'urée formaldéhyde ou une liqueur contenant une aminoplaste riche en urée et, pour l'encollage de la fraction fine de la matière particulaire, une liqueur contenant, comme résine, une résine de mélamine au moins dans une mesure prédominante.